# EUROPEAN PATENT APPLICATION

(11) **EP 1 780 622 A1**
(43) Date of publication of application: **02.05.2007**
(21) Application number: 05292299.4
(22) Date of filing: 28.10.2005
(51) Int. Cl.: G06F 1/00

(54) **An authentication token which implements DRM functionally with a double key arrangement**

(71) Applicant: Axalto SA, 92120 Montrouge (FR)
(72) Inventor: Mahalal, Lian, 92120 Montrouge (FR); Tales, Alain, 92120 Montrouge (FR)
(74) Representative: Jacquot, Ludovic R. G.

(57) **Abstract**

The invention relates to a personal token (20) for playing Digital Rights Content on a mobile rendering device (10), the personal token (20) comprising a service key (SEKsim) for contributing to decryption of a traffic key which encrypts the Digital Rights content, the personal token (20) also storing a service key (SEKhandset) for the handset and delivering such service key (SEKhandset) to the handset for the handset to perform a contribution to decryption of the traffic key with the said service key (SEKhandset) of the handset. characterized in that the service key (SEKsim) of the personal token (20) remains secret to the handset.

## Description

The invention relates to DRM when using personal tokens.

Personal tokens are typically smart cards, USB authentication tokens, MMC (mass memory card) tokens, SD (secure digital) cards, etc , i.e. tokens which are intended to be associated with another device and which implement security functions for allowing personal access to content of such token or to a network, or even to a restricted access area.

"Digital Rights Management" (DRM) is a set of technologies that provides the means to control the distribution and consumption of the digital media and other digital content. It allows content providers to define usage rights to the content. A DRM system enables "Content Issuers" to distribute protected content and "Rights Issuers" to issue to a user some rights objects comprising the usage rights to the delivered protected media.

DRM is more and more popular, especially on mobile handsets.

It may relate to one time delivery of a digital typically for several playbacks, or on broadcast.

DRM technology relies on several specific elements.

Most DRM systems rely on trusted hardware. While protected (encrypted) content may be freely distributed, rights objects comprising the information necessary to access the content (e.g. the decryption keys) are only delivered to devices which are believed to be "DRM compliant", which means that (1) the device accesses the content only if the access is covered by the usage rights comprised by the rights object, and (2) content cannot be extracted from the device and distributed to others in unprotected form, e.g. decrypted.

A DRM compliant device typically includes a piece of software which is called a DRM agent, whose role is to decrypt the protected content with the key delivered from the rights object, and to ensure that the usage rights defined in the rights object are not outpassed.

A DRM system enables "Content Issuers" to distribute protected content and "Rights Issuers" to issue to a user some rights objects comprising the usage rights to the delivered protected media.

The protection of the content is usually achieved by encryption. The decryption key or any other information necessary to access the content is also comprised by the rights objects.

A rights object therefore typically includes a key and usage rights.

The key may be a single key, delivered to the handset, or a service key in the case of broadcast, used for decrypting a traffic key in the broadcasted stream which is ever changing.

Usage rights define how a content is to be used, i.e. the manner in which a content can be accessed. Examples for such usage rights are "the content may only be rendered if it has not yet been rendered more than x times" or "the content may be rendered if the current date is between day y and day z".

The rights object, for example the service key and the usage rights may be stored in the SIM card, the SIM card decrypting the traffic key without disclosing the service key to the handset, and providing the decrypted traffic key to the handset for later decryption of the digital content by the handset.

The purpose of the invention is to enhance portability while providing high level of security.

This purpose is achieved thanks to the features which are recited in the appended claims.

Other purposes, advantages and aspects of the invention will appear through the following description, which is made in reference to the appended figures, among which :
Figure 1 depicts a DRM system according to a preferred embodiment of the invention,
Figure 2 depicts an advantageous aspect of a DRM system according to the invention.

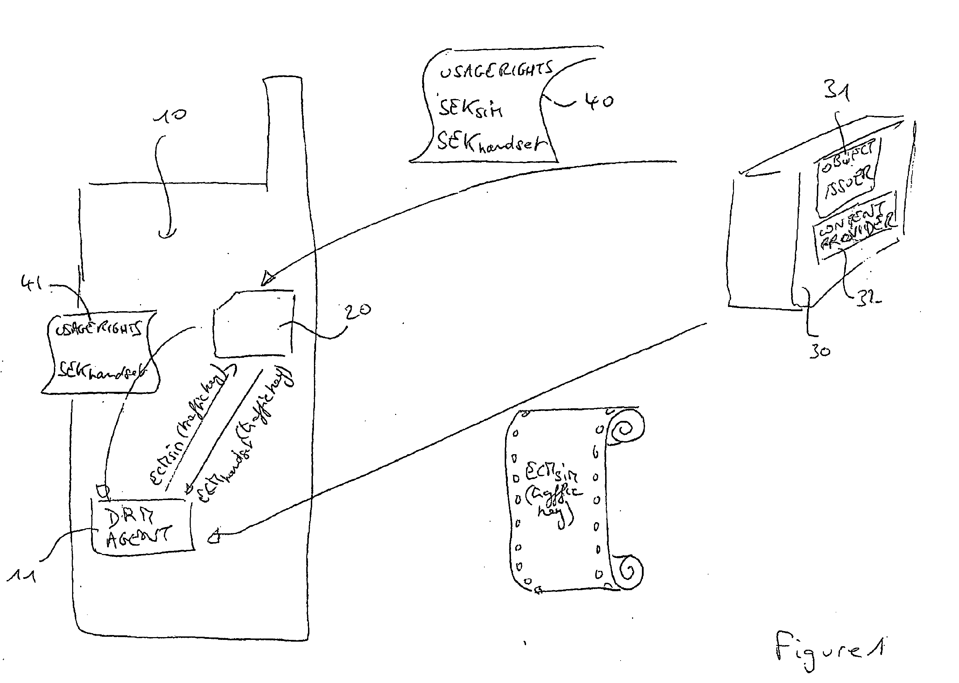

The preferred embodiment depicted on figure 1 relies mainly on three physical components, i.e. mobile handset 10, a SIM card 20, a remote DRM server 30. These three physical components embed and implement three logical components, which are specific to the DRM implementing, i.e. a remote rights object issuer 31 embedded in the remote DRM server 30, a content provider 32 also embedded in the remote server 30 and a DRM agent 11 in the handset 10, which DRM agent 11 has for role to check some usage rights and to decrypt the encrypted content if such usage rights do not oppose to such decryption. For that purpose, a rights object is expected by the DRM agent, which rights object contains the usage rights and the necessary decrypting key.

In the present case, an original rights object 40 is first provided by the remote server 30 to the SIM card 20, via over the air communication, for example via dedicated SMS.

The Rights object 40 is stored in the SIM card 20 and contains the usage rights together with a couple of keys Kₛᵢₘ and K_{handset} the purpose of which will be described hereafter.

Once or after the Rights object 40 is stored in the SIM card 20, encrypted digital content is downloaded from the remote server 30 into the handset 10 for later decryption of such digital content.

Once the encrypted digital content is downloaded into the handset 10 and the rights object 40 is stored in the SIM card, the DRM agent 11 of the handset needs specific decrypting key and usage rights for authorizing itself and performing the decryption. In the present case, the content is broadcasted and the broadcasted stream includes consecutive traffic keys which are encrypted.

The present DRM agent 11 in the handset 10 is programmed for not only to use the traffic keys so as to decrypt the content, but also to perform a decryption process onto the traffic keys, i.e. to contribute to the decryption of the traffic keys. For that purpose, the handset 10 stores a handset service key, SEK_{handset}.

Decryption of the traffic keys is also performed partly by the SIM card 20. For that purpose, the SIM card stores a SIM service key SEKₛᵢₘ.

Both the SIM service key SEKₛᵢₘ and the handset service key SEK_{handset} are originally part of the rights objets 40 provided by the remote server 20 to the SIM card 20 and stored in the SIM card 20. The service key of the handset thereafter appears onto the handset 10 by means of the SIM card 20 providing the handset service key to the handset 10. However, the service key of the SIM card remains secret inside the SIM card, and in particular the service key of the SIM card is not disclosed to the handset.

Furthermore, before providing the handset service key to the handset 10, authentication of the handset 10 is performed by the SIM card 20 which aims at ensuring that the handset 10 is an authorized handset, i.e. for example is a reliable DRM compliant handset.

The fact that a rendering device is DRM compliant means that (1) the device accesses the content only if the access is covered by the usage rights comprised by the rights object, and (2) content cannot be extracted from the device and distributed to others in unprotected form, e.g. decrypted.

In the present case, In order to decrypt the content, a traffic key must by submitted to two necessary decryption steps, one performed by the SIM card 20 and one performed by the handset 10.

Without presence of the SIM card 20, the handset 10 is not able to decrypt alone the broadcasted content, even though the handset service key may have been provided to the handset. This prevents fraud due to escape of authorization from the SIM card.

On the contrary, a given SIM card 20 may authorize decryption of the broadcasted content whatever the handset it may be inserted in. Indeed, the rights object 40 which is stored in the SIM card includes not only the service key of the SIM card, but also the service key of the handset it may be inserted in.

Therefore the full rights for decryption are not attached to the handset 10 although the handset still performs itself a decryption of the traffic key, but the full rights for decryption remain attached to the SIM card 20 and may be implemented in association with any handset, after a possible check of the compliance of the handset to technical reliability requirements.

In the present example, a rights object 41 is provided to the handset 10 from the SIM card 20, which rights object includes not only the handset service key, but also some usage rights intended to be abided to by the DRM agent 11 of the handset 10.

This is advantageous in the case decryption of the content is performed by a DRM agent which expects such usage rights. In such case, the SIM card 20 provides to the DRM agent 11 with a rights object 41 which is constituted by the service key of the handset and the usage rights.

The traffic key is partly decrypted by the SIM card may be considered also as part of such rights object 41 which is provided to the handset during reception of the broadcasted stream.

For the purpose of double encryption, in the remote server 30 the traffic key is first encrypted inside an ECM (Entitlement Control Message) using the service key SEK_{handset} of the handset 10.

This ECM includes an identifier that indicates that it can be decrypted by the handset 10 using only the handset service key SEK_{handset}. This once encrypted ECM, i.e. which is ready for being decrypted by the handset key will be called thereafter the "ECM_{handset}".

As a second step, this ECM_{handset} message is encrypted in the remote server 30 into another ECM, using the service key of the SIM card SEK_{SIM}. This twice encrypted ECM, which includes the ECM_{handset} but has to be decrypted first with the service key of the SIM card, is called ECM_{SIM}.

This message ECM_{SIM} containing the traffic key is therefore encrypted twice, and is then inserted inside the streamed content as one of the "traffic key messages".

Upon reception of ECM_{SIM} message the handset 10 identifies the type of such message and sends it to the SIM card 20 as being an ECM_{SIM} type message.

The SIM card 20 provisioned with the rights object 41 for rendering the content then decrypts the ECM_{SIM} message with the SIM card service key SEK_{SIM} key. SEK_SIM key is therefore used to decrypt the ECM_{SIM} message in order to provide the ECM_{handset} message.

It should be noted that in the present case, the SIM Card stores and implements a rights object, which in the present case is additional to the rights object of the handset. The SIM card checks such rights object and performs the decryption of ECM_{SIM} only if such rights object allows that. To that end, the SIM card stores and implements its own DRM agent, in a similar way as described for the handset.

The decrypted message, now ECM_{handset} is sent back to the handset where it is managed by the DRM agent 11 of the handset 10, in particular decrypted with the service key SEK_{handset} of the handset 10.

The above described embodiment comprises a Rights Object 40 for the streamed content which is provisioned inside the portable device 10 and contains two keys, i.e. the service key of the handset SEK_{handset} and the service key of the SIM SEKₛᵢₘ.

Retrieval of the Rights Object 41 by the handset 10 from the SIM card 20 is done when the DRM agent 11 of the handset 10 connects to a Rights Issuer server which is implemented in the SIM card 20.

The Rights Issuer server of the SIM card and the DRM agent of the handset communicate together via a secure protocol that includes mutual authentication. In this context each of them has some credentials that allow performing such mutual authentication.

Let's take an example with a PKI authentication where each device has a public key pair (private and public keys) and an associated certificate for the public key.

In the mutual authentication protocol each device sends its certificate to the other device and the protocol also includes some form of a challenge response where a device sends a challenge (e.g. a random number) and the other device signs this challenge with its private key and sends it back as a response.

The challenging device can then decrypt the challenge with the public key that was communicated in the certificate sent by the challenged device. If the decrypted response is the same as the sent challenge it means that the challenged device has the corresponding private key and it is correctly authenticated.

Using PKI authentication also involves certificate validation where the device that receives the certificate needs to verify if the authority that signed this certificate is an authority that it trusts.

Beyond this validation the receiving device also needs to check whether the received certificate has not been revoked for any reason (e.g. put in a black list) or whether its validity period has expired.

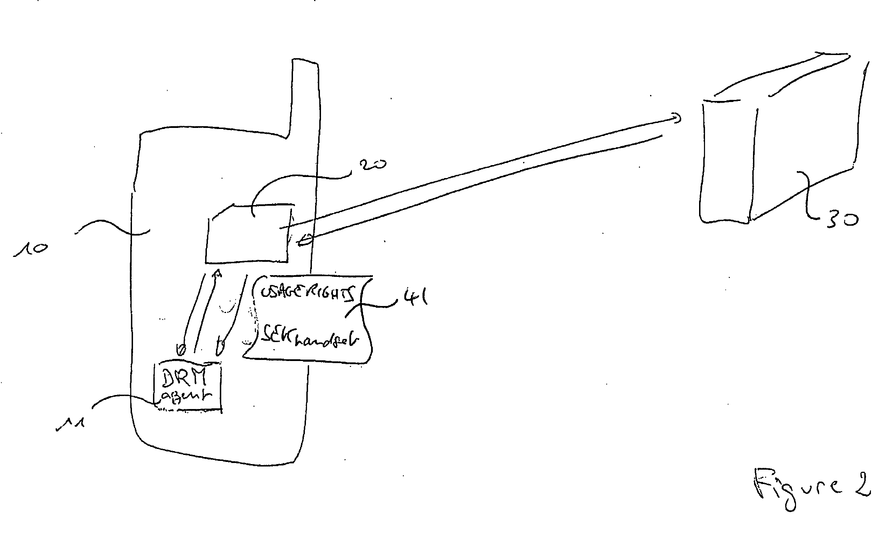

Some portable devices may not have the capability to do certificate validation and revocation checking since it implies the provisioning of secure time and getting an up to date list of revoked certificates. The solution to this problem (figure 2) is to delegate the validation and revocation checks to a remote server by enhancing some identification mechanisms that already exist.

Mobile handsets can be identified by a unique identifier, called IMEI, that is securely provisioned in the handset during manufacturing. The SIM card 20, communicating with the handset 10, can get this unique identifier from the handset 10 via an existing standardized protocol.

The SIM card 20 then sends this IMEI to a remote server such as server 30 with an end to end secure protocol which is also already standardized. The remote server 30 embeds a database of the mobile handsets indexed with their IMEI identifiers.

This remote server 30 can fetch the information about the mobile handset 10 with the IMEI identifier and also find the handset certificate.

It is then able to do validation and revocation checks for this certificate. If this check shows that the certificate is still valid and not revoked the remote server 30 will send to the SIM card 20 the public key of the mobile handset by using the secure end-to-end communication protocol.

In other words, the SIM card 20 gets a unique apparatus identifier from the handset 20 and sends it to a remote server 30 which has a database of unique identifiers of apparatus with information on capabilities and authentication credentials like device certificate and the remote server performs a validation and revocation check of the apparatus credentials to verify if they are still valid or revoked for any reasons.

The credentials of the handset 10 are preferably maintained up to date in the remote server 30 as a handset certificate with the handset public key in the form of an X509 certificate or in another equivalent standard or proprietary format.

The remote server 30 preferably has a database of handset information and is capable to find, based on a received handset unique identifier, the authentication credentials of the demanded handset and do a validation and revocation check to find if its credentials are not revoked.

The remote server 30 sends the credentials back to the SIM card 20 after the validation and revocation check and the credentials of the handset allow the SIM card to authenticate a handset with which it interacts by using a secure authentication protocol. The credentials that are dealt with in this checking process are for example the apparatus public key.

The SIM card 20 then securely stores this public key in an internal list and is now able to authenticate the mobile handset 10 with the above mentioned procedures but without the need to do certificate validation and revocation check procedure itself.

It has to be understood that the presently described personal token is a SIM card, i.e. a token which has for primary role to allow access to the mobile telephony network i.e. a SIM card in the present example. Such token therefore implements both the access to such network, and the presently described DRM functionality.

The invention is not limited to telephony network authentication tokens, but can be applied to any type of other token for access to a telecommunication network, for example to a personal token for access to some particular networks on the internet, of personal tokens for PDAs in a network for mobile internet.

Implementing these both functionalities on the same token provides the main advantage of personalizing the way the rights objects are carried by the end-user, ensuring that the DRM functionalities are present with the user independently of the handset 10 the token 15 is placed in.

The user transports his rights objects with his SIM card from handset to handset, without having to worry about this aspect, as though the SIM card was a rudimentary SIM card.

## Claims

1. A method for playing Digital Rights Content on a mobile rendering device (10), the method comprising the steps which consist in :
a) providing a mobile rendering device (10) which is able to be associated with a personal token (20),
b) providing a personal token (20) which comprises a service key (SEKsim) for contributing to decryption of a traffic key which encrypts the Digital Rights content, the result of said traffic key decryption contribution being transmitted to the handset,
the method being **characterized in that** the method comprises the steps which consist in :
c) providing the handset with a service key (SEKhandset),
d) performing a contribution to decryption of the traffic key in the handset with the service key (SEKhandset) of the handset.

2. The method according to claim 1, **characterized in** the personal token (20) is a mobile telecommunication network authentication token.

3. The method according to claim 1, **characterized in** the personal token (20) is a mobile telephony network authentication token.

4. The method according to anyone of the previous claims, **characterized in that** it includes the step which consists in storing the handset service key (SEKhandset) in the personal token (20) and delivering the service key (SEKhandset) of the handset to the handset from the personal token (20).

5. The method according to anyone of the preceding claims, **characterized in that** the service key (SEKsim) of the personal token (20) remains secret in the personal token.

6. The method according to anyone of the preceding claims, **characterized in that** a rights object is provided from the personal token (20) to the handset, which rights object comprises both the handset service key (SEKhandset) and usage rights.

7. The method according to anyone of the preceding claims, **characterized in that** the personal token (20) forwards an identifier of the handset to a remote server (30), which remote server (30) identifies the handset as authorized or not to be provided with a handset service key (SEKhandset), and the remote server (30) sends a response to the personal token (20) according to which response the personal token (20) delivers or not a handset key to the handset.

8. The method according to claim 7, **characterized in that** the remote server (30) provides credentials of the handset and the personal token (20) authenticates the handset (10) with the provided credentials.

9. The method according to claim 7, **characterized in that** a remote server (30) is capable to send credentials of the handset to the portable device after a validation and revocation check and wherein these credentials can allow the portable device to authenticate a rendering device with which it interacts by using a secure authentication protocol.

10. The method according to anyone of the preceding claims, **characterized in that** the rendering device (10) forwards a received encrypted message including the traffic key to the personal token, and the personal token (20) sends to the rendering device (10) in return the message containing the traffic key which message has been decrypted by the personal token (20) with its service key (SEKsim) for decryption by the handset with the handset service key (SEKhandset).

11. The method according to anyone of the preceding claims, **characterized in that** the personal token (20) stores a rights object comprising usage rights and the personal token (20) checks whether the rights objects allows rendering the traffic key decrypted by the service key of the personal token (SEKsim) to the handset as a condition for rendering such traffic key decrypted by the service key of the personal token (SEKsim) to the handset (10).

12. The method according to anyone of the previous claims, **characterized in that** the portable device is a smart card.

13. The method according to anyone of the previous claims, **characterized in that** the portable device is a Multi Media Memory card or a Secure Digital (SD) card.

14. The method according to anyone of the previous claims, **characterized in that** the rendering device (10) is a mobile phone.

15. A traffic key message sent together with a broadcasted Digital Rights content **characterized in that** the traffic key message is encrypted with a service key (SEKsim) which is stored in a personal token (20) and encrypted with a service key (SEKhandset) which is stored in a handset associated with said personal token (20).

16. A personal token (20) for playing Digital Rights Content on a mobile rendering device (10), the personal token (20) comprising a service key (SEKsim) for contributing to decryption of a traffic key which encrypts the Digital Rights content, the personal token (20) also storing a service key (SEKhandset) for the handset and delivering such service key (SEKhandset) to the handset for the handset to perform a contribution to decryption of the traffic key with the said service key (SEKhandset) of the handset **characterized in that** the service key (SEKsim) of the personal token (20) remains secret to the handset.

17. The personal token (20) according to claim 16, **characterized in** the personal token (20) is a mobile telecommunication network authentication token.

18. The personal token (20) according to claim 16, **characterized in** the personal token (20) is a mobile telephony network authentication token.

19. The personal token (20) according to anyone of claims 16 to 18, **characterized in that** the service key (SEKsim) of the personal token (20) is kept secret to the handset inside the personal token (20).

20. The personal token (20) according to anyone of claims 16 to 19, **characterized in that** it stores a rights object which comprises both the handset service key (SEKhandset) and usage rights and the personal token (20) is able to provide the rights object to the handset.

21. The personal token (20) according to anyone of claims 16 to 20, **characterized in that** the personal token (20) forwards an identifier of the handset to a remote server (30), which remote server (30) identifies the handset as authorized or not to be provided with a handset service key (SEKhandset), and the remote server (30) sends a response to the personal token (20) according to which response the personal token (20) delivers or not a rights object comprising handset key to the handset.

22. The personal token (20) according to anyone of claims 16 to 21, **characterized in that** the personal token (20) stores a rights object comprising usage rights and the personal token (20) checks whether the rights objects allows rendering the traffic key decrypted by the service key of the personal token (SEKsim) to a handset (10) as a condition for rendering such traffic key decrypted by the service key of the personal token (SEKsim) to such handset (10).

23. A remote server (30) for encrypting digital rights content to be broadcasted, said remote server (30) performing encryption of said digital rights content to be broadcasted with a service key (SEKsim) which is stored in a personal token (20) of a user, **characterized in that** the remote server (30) performs encryption of the digital rights content to be broadcasted also with a service key (SEKhandset) which is implemented by a handset associated with said personal token (20).

24. The remote server (30) according to the preceding claim, **characterized in that** it performs encryption of the digital rights content to be broadcasted firstly with the service key (SEKhandset) of the handset and secondly with the service key (SEKsim) of the personal token (20).
